# EUROPEAN PATENT SPECIFICATION

(11) **EP 2 088 798 B1**
(45) Date of publication and mention of the grant of the patent: **08.06.2011**
(21) Application number: 07785377.8
(22) Date of filing: 24.07.2007
(51) Int. Cl.: H04L 29/06, H04M 1/66, H04M 3/42

(54) **A METHOD FOR PROCESSING CALL AND A SERVICE CONTROL DEVICE AND A CALL PROCESSING SYSTEM**
VERFAHREN ZUR VERBINDUNGSBEARBEITUNG UND DIENSTSTEUEREINRICHTUNG UND VERBINDUNGSBEARBEITUNGSSYSTEM
PROCÉDÉ DE TRAITEMENT D'APPEL ET PÉRIPHÉRIQUE DE CONTRÔLE DE SERVICE ET SYSTÈME DE TRAITEMENT D'APPEL

(30) Priority: 27.11.2006 CN 200610140321
(43) Date of publication of application: 12.08.2009
(73) Proprietor: Huawei Technologies Co., Ltd., Shenzhen, Guangdong Province 518129 (CN)
(72) Inventor: YIN, Xin, Shenzhen Guangdong 518129 (CN); ZHANG, Yukui, Shenzhen Guangdong 518129 (CN)
(74) Representative: Pfenning, Meinig & Partner GbR
(86) International application number: PCT/CN2007/070347
(87) International publication number: WO 2008/064583

(56) References cited:
- EP-A1- 1 675 369
- WO-A2-01/82564
- CN-A- 1 625 272
- CN-A- 1 705 330
- CN-A- 1 863 252
- JP-A- 2006 079 459
- US-A- 4 847 890
- US-A1- 2003 147 519
- US-B1- 7 103 162

## Description

### Field of the Invention

The present invention relates to call processing technologies and in particular to a call processing method, service control device and call processing system.

### Background of the Invention

With the development of telecommunication networks, the provision of abundant video services over the telecommunication networks has become an inevitable trend, and instant and lively information interaction is changing the life of people. People's requirements for contents and forms of communication are increasingly high and they are not satisfied with the traditional voice communication any longer. What people really need are lively video phone services.

A mobile video phone provides lively and abundant multimedia visual phone services in the mobile communication field, which is honored as a 3G "Killer Application", and the mobile video phone services become one of major driving forces for 3G deployment. The Third Generation Partnership Project, 3GPP, R99 and subsequent versions thereof define visual phone services based upon the circuit domain i.e. Third Generation-H.324 Mobile, H.324 protocol of The Third Generation Mobile Network, 3G-324M. Currently, the 3GPP defines video phone services based upon a circuit domain.

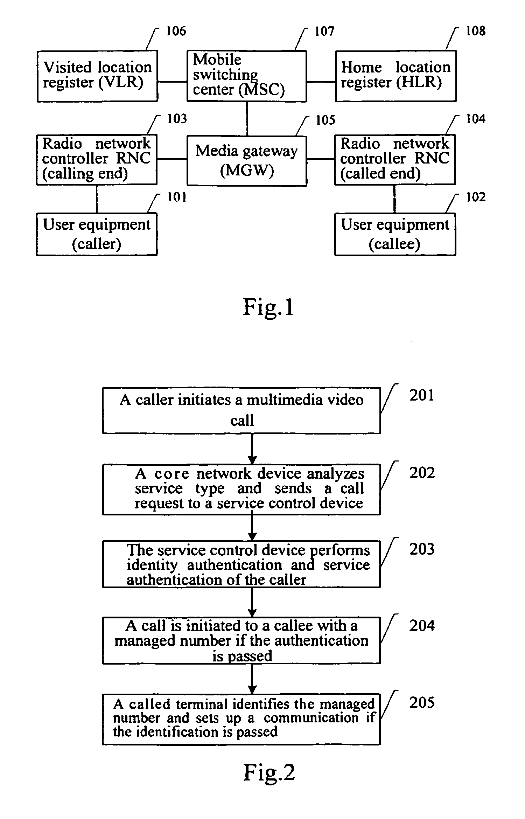

Referring to Fig.1, it is a schematic diagram of an existing mobile communication network. According to the definition of the 3GPP, a user initiates a call to another user of the same office in a basic flow as follows.

(1) A calling user equipment 101 initiates a call request to a Mobile Switching Center, MSC 107;

(2) The MSC 107 initiates an authentication process for the purpose of checking whether to allow an access of a terminal to a network. In this process, the MSC obtains an authentication set from a Home Location Register, HLR, 108. If identity authentication regarding allowance of an access to the network is passed, then the flow proceeds; otherwise, the call is terminated.

(3) The calling user equipment 101 sends a call setting-up message to the MSC 107 after passing identity authentication and receiving a service request acceptance message, and the MSC 107 returns a call processing message to the caller upon reception of the call setting-up message.

(4) As calling-side equipment, a Radio Network Controller, RNC, 103, a Media Gate Way, MGW, 105 and the MSC 107 begin to set up bearer resources at the access side. The MSC 107 inquires an HLR 108 about routing information; the HLR 108 obtains a roaming number from a Visited Location Register, VLR, 106; and after obtaining call data, the MSC 107 triggers the VLR 106 to initiate a paging process to a callee with a calling number.

(5) Upon receiving a paging response message from the callee, the MSC 107 sends a call setting-up message to a called user equipment 102 through a Radio Network Controller, RNC, 104 at the called end.

(6) The MSC 107 awaits off-hook of the callee and sends a put-through message to the calling user equipment 101 upon off-hook.

(7) The calling user equipment 101 sets up a video connection with the called user equipment 102.

A requirement on a video phone service in which images and voices can be obtained directly from the opposite party is to guarantee privacy and security of information of a called user. As can be seen from the above call flow, the subsequent call flow proceeds still with the calling number even after identity authentication of the caller is passed; and there may be a loophole that a calling number for which service authentication is not performed can obtain the actual number that is called and thus call the called number directly, and this loophole may give rise to presence of a hidden danger with respect to security of the information of the called user.

EP 1675369 A1 discloses a method for communicating in a telecommunications network, with the following steps: a) initiation of a communication call by a first subscriber by dialing a service of the telecommunications network and sending subscriber data, b) checking, by means of the subscriber data received, whether the first subscriber is registered for the service, c) if yes, loading a first pseudonym of the first subscriber from a storage device, d) receiving a second pseudonym of a second subscriber to whom the communication call is to be made from the first subscriber, e) checking whether the second pseudonym received is stored in the telecommunications network, f) if yes, loading of subscriber data of the second subscriber assigned to the second pseudonym from the storage device and making the communication call to the second subscriber, g) if no, ending the communication call. This process allows anonymous communication in a telecommunications network without divulging subscriber data.

US 4847890 A discloses a method and apparatus for establishing telephone communications between service subscribers and responding callers through a central system while preserving confidentiality and mutual anonymity of the subscribers and callers. Incoming calls from callers intended for subscribers identified by coded entries, are transferred by the system controller and a digital switch either to a message recording facility or directly to the subscriber. If the subscriber is unavailable, a message can be left by the caller, but does not need to include the telephone number of the caller. The subscriber then is able to call the caller, through the central system controller, without breaching anonymity of either the caller or the subscriber.

US 2003/147519 A1 relates generally to logical telephone numbers. In particular, dynamic number users are able to obtain dynamic numbers and to map those numbers to routable numbers of their choosing. The present invention provides a tool for protecting privacy while sharing and/or publicizing a number for public purposes. The present invention relates to a Dynamic Telephone Number Service (DTNS.) wherein users are provided with a logical temporary telephone number that is mapped dynamically to a physically addressable number. The use of the DTNS allows a dynamic number user to publish the logical number, thus avoiding the need to publish private information and phone numbers for public purposes. Further, the logical number is not permanently assigned, but rather is temporary and provided to the dynamic number user for a relatively short period of time.

US 7 103 162 B1 relates to a privacy system that screens each incoming call, whereas a call that does not include a name identification is only put through with an on-line reference when the calling party is on a list of privileged calling parties.

### Summary of the Invention

Embodiments of the invention provide a call processing method, service control device and call processing system to achieve initiation of a call to a callee with a managed number and to improve service security.

In view of above, the invention can be practiced through the following technical solutions.

A call processing method includes: receiving a call request including a real number of a called number from a caller; authenticating the caller which includes inquiring a list of calling numbers authorized by a callee and determining whether the caller is in the list of authorized numbers; obtaining a managed number corresponding to the real number according to a preset correspondence relationship between the real number and the managed number after the caller passes authentication; initiating a call carrying the managed number to the real number ; identifying, by a terminal to which the called number belongs, the managed number upon reception of the call carrying the managed number, and setting up communication with the caller after identification is passed.

A service control device includes: a service authentication unit adapted to receive a call request including a real number of a called number from a caller and to perform service authentication of the caller which includes inquiring a list of calling numbers authorized by a callee and determining whether the caller is in the list of authorized numbers; a managed number inquiry unit adapted to inquire a data storage unit about a managed number corresponding to the real number according to a preset correspondence relationship between the real number and the managed number after the caller passes service authentication; and a call initiation unit adapted to initiate a call carrying the managed number to the real number, in order to enable a called terminal to identify the managed number and set up communication with the caller after identification is passed.

A call processing system includes: a service control device adapted to communicate with a called terminal.

The service control device is further adapted to receive a call request comprising a real number of a called number from a caller, to authenticate the caller which comprises inquiring a list of calling numbers authorized by a callee and determining whether the caller is in the list of authorized numbers, to obtain a managed number corresponding to the real number according to a preset correspondence relationship between the real number and the managed number after the caller passes authentication and to initiate a call carrying the managed number to the real number; and the called terminal is adapted to identify the managed number upon reception of the call carrying the managed number and to set up communication with the caller after identification is passed.

According to the above technical solutions, in the invention, because a correspondence relationship between a called number and a managed number is pre-established, service authentication of a caller is performed upon reception of information on a call request initiated by the caller to the called number; a call to the called number is initiated with the management number after authentication is passed; and a terminal to which the called number belongs identifies the managed number and sets up communication with the caller after identification is passed. Because the called terminal only receives call information sent from the managed number and identifies the received managed number upon reception of the call information, it is possible to avoid direct calling by the caller to the called number without any authentication flow, to guarantee privacy of information of a called user and to improve service security.

### Brief Description of the Drawings

Fig.1 is a schematic diagram of an existing mobile communication network;

Fig.2 is a flow chart of a call processing method according to an embodiment of the invention;

Fig.3 is a schematic diagram of call processing according to one embodiment of the invention;

Fig.4 is a schematic diagram of call processing according to another embodiment of the invention; and

Fig.5 is a schematic diagram of a call processing system according to an embodiment of the invention.

### Detailed Description of the Invention

The embodiments of the invention provide a call processing method, a service control device and a call processing system, including: a correspondence relationship between a called number and a managed number is pre-established; service authentication of a caller is performed upon reception of information on a call request initiated by the caller to the called number; a call to the called number is initiated with the management number after authentication is passed; and a called terminal identifies the managed number and sets up communication with the caller after identification is passed, thereby avoiding direct calling by the caller to the called number without any authentication flow.

Referring to Fig.2, it is a flow chart of a call processing method according to an embodiment of the invention, including:

Step 201: A caller initiates a multimedia video call to a called number.

Step 202: A core network device analyzes a service according to the call request, and sends a video call request to a service control device if the service is a video service for which service authentication is required.

Step 203: The service control device performs identity authentication and service authentication of the caller respectively according to caller identity information and caller service information.

S204: If the caller identifier and the caller service pass authentication, then a call is initiated to the called number with a managed number; otherwise, the call initiated by the calling user is terminated.

Step 205: A terminal to which the called number belongs identifies the managed number, and sets up communication with the caller if identification is passed.

The managed number refers to a unique specific number set for each called number as required for a service, and has a one-to-one correspondence relationship with a real number. For instance, a real number of the called number is 13866666666, and the corresponding managed number is 2001234. The managed number can be set at the service control device. The calling user can not know the correspondence relationship between the real number and the managed number. The called terminal only accepts a call initiated from the corresponding managed number, so that the called terminal can be called successfully from the calling number only after service authentication of the calling number is passed and the call to the callee is initiated from the managed number.

The above authentication can be performed in two ways, 1.firstly identity authentication of the caller is performed; the call is terminated if identity authentication fails and service authentication of the caller is further performed if identity authentication is passed; and the call is terminated if service authentication fails, and the call is initiated to the callee if service authentication is passed. 2. both identity authentication and service authentication are performed; and the call is terminated if identity authentication of the caller and/or service authentication of the caller fails, and the call is initiated to the callee only if both identity authentication of the caller and service authentication of the caller are passed.

The technical solutions are described in detail below in connection with the embodiments for further understanding of the invention.

*The First Embodiment*

Currently, mobile video phones have been applied widely, and systemic devices and terminals have been mature. With the development of global 3G networks, mobile video services have an inestimable development perspective. In future years, services in service fields of image, text, data and the like will surpass far the traditional voice communication field, and applications of various mobile terminals and emergence of more services will enrich the life of people tremendously, so that scene intercourse in the ultimate scenario of Face to Face (F2F) for human intercommunication can be achieved, with the use of a mobile visual terminal, people can share experiences and emotions, , obtain information and entertainment and communicate with others, thereby a new communication approach and service enjoyment are provided. Since circuit domain video phone services can be spread with a lost cost, and are easy to operate and simple to use and also are consistent with the standard of 3G-324M clients, therefore operators can spread the circuit domain video phone services more easily.

The 3G-324M is the first multimedia terminal standard established by the 3GPP, which is suitable for the Third Generation Communication system (3G), and is consisted of error-tolerant video and audio coding and H.324 mobile extended terminal standards. The 3G-324M standard established by the 3GPP includes two files, i.e., TS 26.112 regarding setting-up of a circuit switched call and TS26.111 regarding a 3G-324M operation process.

The technical solutions will be described below which are implemented based upon the 3G-324M mechanism.

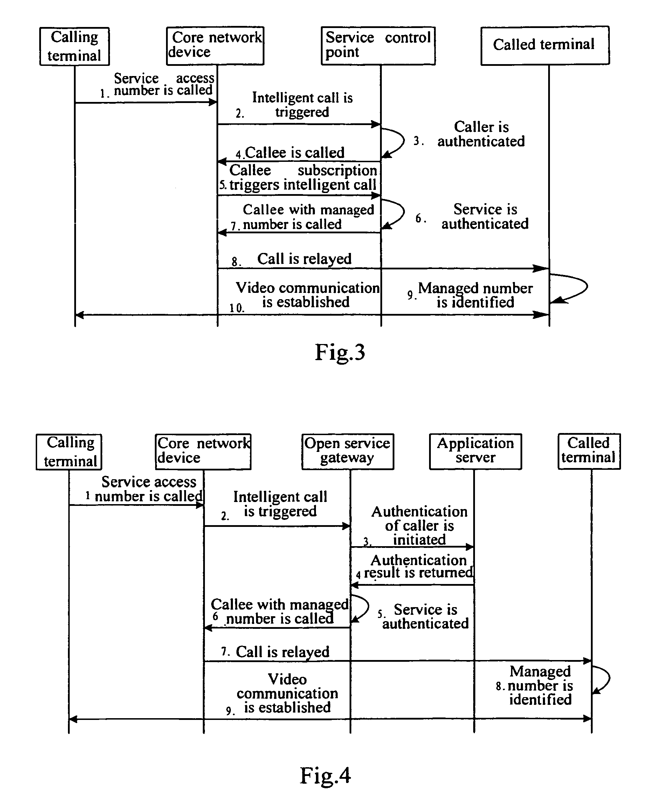

Referring to Fig.3, it is a schematic diagram of call processing according to the first embodiment of the invention, where a core network device refers to a network device such as an MGW, an MSC and an HLR, and the service control device mentioned above refers particularly to a Service Control Point, SCP, in this embodiment.

(1) A user initiates a video phone call by dialing an access number of a video service.

(2) The radio core network device analyzes according to the access number and obtains a service type having a service attribute which requires authentication, and relays the call request to the SCP for proceeding of the call, that is, triggers an intelligent call.

(3) The SCP performs identity authentication of the caller according to a calling number and a password.

(4) The SCP initiates a call to a callee if authentication is passed and terminates the service if authentication is not passed.

(5) Subscription of the callee triggers an intelligent call, that is, a call request is relayed to the SCP for proceeding of the call when the call request is initiated to the callee.

(6) The SCP performs service authentication of the caller, inquires a list of calling numbers authorized by the callee and determines whether the caller is in the list of authorized numbers.

(7) A managed number corresponding to the called number is obtained if service authentication is passed; and a video call is initiated to the called number with the managed number, and the service is terminated if authentication is not passed.

(8) The core network device relays the video call to a called terminal.

(9) The terminal to which the called number belongs identifies the managed number and feeds back information indicating allowance of setting up communication if identification is passed.

For the identification, the called terminal presets an acceptable managed number, determines whether a managed number in the call information is identical to the preset managed number upon reception of the call information carrying the managed number, and if they are identical, which indicates that the call is valid, then the terminal feeds back information indicating allowance of setting up communication; and if they are not identical, which indicates that the call is invalid, then the terminal terminates the call.

(10) The caller and the callee sets up video communication.

*The Second Embodiment*

Referring to Fig.4, it is a schematic diagram of call processing according to the second embodiment of the invention, where a core network device refers to a network device such as an MGW, an MSC and an HLR, and the service control device mentioned above refers particularly to an Open Service Gateway, OSG, in this embodiment.

(1) A user initiates a video phone call by dialing an access number of a video service.

(2) The radio core network device analyzes according to the access number and obtains a service attribute having a service type which requires authentication, and relays the call request to the OSG for proceeding of the call.

(3) The OSG initiates a caller identity authentication request to an application server.

(4) The application server authenticates the caller according to a calling number and a password and returns an authentication result to the OSG. The Application server returns an authentication success response if authentication is passed and terminates the service if authentication is not passed.

(5) The OSG inquires a list of calling numbers authorized by the callee and determines whether the caller is in the list of authorized numbers. If the calling number is in the list of numbers for which an access to the callee is allowed, then service authentication is passed; and if the calling number is not in the list of numbers for which an access to the callee is allowed, then service authentication is not passed and the service is terminated.

(6) The OSG obtains a managed number corresponding to the called number and initiates a call to the callee with the managed number.

(7) The core network device relays the video call to a called terminal.

(8) The terminal to which the called number belongs identifies the managed number and feeds back information indicating allowance of setting up communication if identification is passed.

(9) The caller and the callee sets up video communication.

As can be seen from the above two embodiments, the technical solutions can enhance security of the use of a video phone service and can be applicable especially to those services in which only an authorized user can obtain on-site information. Improved security plays an important role in spreading applications of video phones, and therefore the invention has a high commercial application value.

The above solutions have been described only the embodiments of the invention applied in a wireless network, but implementations of the invention in a wired network, for example, a fixed telephone network, shall not be excluded.

The invention is not limited to applications in the field of video phones. The invention is also applicable to voice phones with a high security requirement, for example.

A service control device of the invention includes a data storage unit adapted to store data of a correspondence relationship between a called number and a managed number; a service authentication unit adapted to perform service authentication of a caller upon reception of information on a call request initiated from the caller to a called number; an identity authentication unit adapted to perform identity authentication of the caller prior to service authentication; a managed number inquiry unit adapted to inquire the data storage unit about the managed number corresponding to the called number after the caller passes service authentication; and a call initiation unit adapted to initiate a call to the called number through the managed number.

The service control device is particularly an SCP or an OSG.

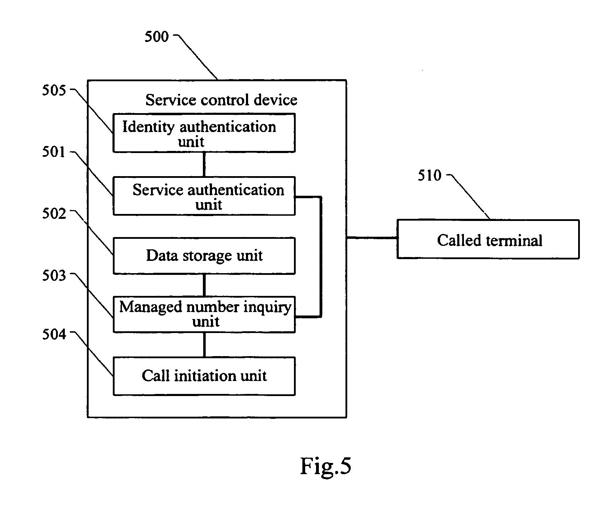

Referring to Fig.5, it is a schematic diagram of a call processing system according to an embodiment of the invention, and the system includes a service control device 500 and a called terminal 501.

Particularly, the service control device 500 includes: a service authentication unit 501 adapted to perform service authentication of a caller upon reception of information on a call request initiated from the caller to a called number; an identity authentication unit 505 adapted to perform identity authentication of the caller prior to service authentication; a data storage unit 502 adapted to store data of a correspondence relationship between a called number and a managed number; a managed number inquiry unit 503 adapted to inquire the data storage unit 502 about the managed number corresponding to the called number after the caller passes service authentication; and a call initiation unit 504 adapted to initiate a call to the called number with the managed number.

The called terminal 510 identifies the managed number upon reception of call information carrying the managed number and feeds back information indicating allowance of setting up communication after identification is passed.

The service control device 500 is an SCP, or an OSG and an application server.

The system operates in a flow as follows: The identity authentication unit 505 of the service control device 500 performs identity authentication of a caller upon reception of information on a call request initiated from the caller to a called number. The service authentication unit 501 performs service authentication of the caller after identity authentication is passed. The managed number inquiry unit 503 inquires the data storage unit 502 about the managed number corresponding to the called number and sends the managed number to the call initiation unit 504. The call initiation unit 504 sends a call to the called number with the managed number. The called terminal 510 identifies the managed number and feeds back information indicating allowance of setting up communication after identification is passed. The caller and the callee sets up communication.

The call processing method, the service control device and the call processing system provided according to the invention have been described in detail as above. The principle and embodiments of the invention have been set forth by way of specific examples, and the descriptions of the embodiments are merely for understanding of the inventive method and the core idea thereof. Those skilled in the art can make changes to the embodiments and their application in light of the scope of the invention. Accordingly, the description of the embodiments shall not be taken as limiting the scope of the invention.

## Claims

1. A call processing method, **characterized by** comprising:
receiving a call request comprising a real number of a called number from a caller (202);
authenticating the caller, which comprises service authentication comprising inquiring a list of calling numbers authorized by a callee and determining whether the caller is in the list of authorized numbers (203);
obtaining a managed number corresponding to the real number according to a preset correspondence relationship between the real number and the managed number after the caller passes authentication;
initiating a call carrying the managed number to the real number (204);
identifying, by a terminal to which the called number belongs, the managed number upon reception of the call carrying the managed number, and
setting up communication with the caller after identification is passed.

2. The method according to claim 1, wherein the call request is a multimedia video call request.

3. The method according to claim 1 or 2, wherein the authentication comprises identity authentication and the service authentication of the caller; and the process of performing identity authentication and the service authentication of the caller comprises:
performing firstly identity authentication of the caller, and then performing service authentication of the caller after identity authentication is passed; or
performing concurrently identity authentication and service authentication of the caller.

4. A service control device, **characterized by** comprising:
a service authentication unit (501) adapted to receive a call request comprising a real number of a called number from a caller and to perform service authentication of the caller which comprises service authentication comprising inquiring a list of calling numbers authorized by a callee and determining whether the caller is in the list of authorized numbers;
a managed number inquiry unit (503) adapted to inquire a data storage unit (502) about a managed number corresponding to the real number according to a preset correspondence relationship between the real number and the managed number after the caller passes service authentication; and
a call initiation unit (504) adapted to initiate a call carrying the managed number to the real number,
in order to enable a called terminal to identify the managed number and set up communication with the caller after identification is passed.

5. The service control device according to claim 4, wherein:
the data storage unit is adapted to store data of a correspondence relationship between the real number and the managed number.

6. The service control device according to claim 4, further comprising an identity authentication unit (505) adapted to perform identity authentication of the caller prior to the service authentication.

7. The service control device according to claim 4 or 6, wherein the service control device is a service control point or an open service gateway.

8. A call processing system, **characterized by** comprising: a service control device adapted to communicate with a called terminal; wherein
the service control device (500) is further adapted to receive a call request comprising a real number of a called number from a caller, to authenticate the caller which comprises inquiring a list of calling numbers authorized by a callee and determining whether the caller is in the list of authorized numbers, to obtain a managed number corresponding to the real number according to a preset correspondence relationship between the real number and the managed number after the caller passes authentication and to initiate a call carrying the managed number to the real number; and
the called terminal (510) is adapted to identify the managed number upon reception of the call carrying the managed number and to set up communication with the caller after identification is passed.

9. The call processing system according to claim 8, wherein the service control device comprises:
a data storage unit adapted to store data of the correspondence relationship between the real number and the managed number;
a service authentication unit adapted to receive the call request comprising the real number of the called number from the caller and to perform the service authentication of the caller which comprises service authentication comprising inquiring a list of calling numbers authorized by a callee and determining whether the caller is in the list of authorized numbers;
a managed number inquiry unit adapted to inquire the data storage unit about the managed number corresponding to the real number according to the preset correspondence relationship between the real number and the managed number after the caller passes service authentication; and
a call initiation unit adapted to initiate a call to the real number from the managed number.

10. The call processing system according to claim 9, wherein the service control device further comprises an identity authentication unit adapted to perform identity authentication of the caller prior to the service authentication.

11. The call processing system according to claim 8, wherein the service control device is a service control point, or the service control device is an open service gateway and an application server.

## Patentansprüche

1. Anrufverarbeitungsverfahren, **gekennzeichnet durch** die folgenden Schritte:
Empfangen einer Anrufanforderung, die eine reale Nummer einer angerufenen Nummer umfasst, von einem Anrufer (202);
Authentifizieren des Anrufers, das Dienstauthentifikation, umfassend Abfrage einer Liste von **durch** einen Angerufenen autorisierten anrufenden Nummern, und
Bestimmen, ob der Anrufer auf der Liste von autorisierten Nummern steht, umfasst (203);
Erhalten einer der realen Nummer entsprechenden verwalteten Nummer gemäß einer voreingestellten Korrespondenzbeziehung zwischen der realen Nummer und der verwalteten Nummer, nachdem der Anrufer die Authentifikation besteht;
Einleiten eines die verwaltete Nummer tragenden Anrufs der realen Nummer (204); Identifizieren der verwalteten Nummer **durch** ein Endgerät, zu dem die angerufene Nummer gehört, nach dem Empfang des die verwaltete Nummer tragenden Anrufs und
Aufbauen von Kommunikation mit dem Anrufer, nachdem die Identifikation durchlaufen ist.

2. Verfahren nach Anspruch 1, wobei die Anrufanforderung eine Multimedia-Videoanrufanforderung ist.

3. Verfahren nach Anspruch 1 oder 2, wobei die Authentifikation Identitätsauthentifikation und die Dienstauthentifikation des Anrufers umfasst; und der Prozess des Durchführens der Identitätsauthentifikation und der Dienstauthentifikation des Anrufers Folgendes umfasst:
Durchführen von Identitätsauthentifikation des Anrufers zuerst und dann Durchführen von Dienstauthentifikation des Anrufers, nachdem die Identitätsauthentifikation bestanden ist; oder
Durchführen von Identitätsauthentifikation und Dienstauthentifikation des Anrufers gleichzeitig.

4. Dienststeuereinrichtung, **dadurch gekennzeichnet, dass** sie Folgendes umfasst:
eine Dienstauthentifikationseinheit (501), die dafür ausgelegt ist, eine Anrufanforderung, die eine reale Nummer einer angerufenen Nummer umfasst, von einem Anrufer zu empfangen und Dienstauthentifikation des Anrufers durchzuführen, die Dienstauthentifikation, umfassend Abfrage einer Liste von durch einen Angerufenen autorisierten anrufenden Nummern, und Bestimmen, ob der Anrufer auf der Liste von autorisierten Nummern steht, umfasst;
eine Abfrageeinheit (503) verwalteter Nummern, die dafür ausgelegt ist, eine Datenspeichereinheit (502) über eine verwaltete Nummer abzufragen, die gemäß einer voreingestellten Korrespondenzbeziehung zwischen der realen Nummer und
der verwalteten Nummer der realen Nummer entspricht, nachdem der Anrufer die Dienstauthentifikation besteht; und
eine Anrufeinleitungseinheit (504), die dafür ausgelegt ist, einen die verwaltete Nummer tragenden Anruf der realen Nummer einzuleiten, um es einem angerufenen Endgerät zu ermöglichen, die verwaltete Nummer zu identifizieren, und
Kommunikation mit dem Anrufer aufzubauen, nachdem die Identifikation bestanden ist.

5. Dienststeuereinrichtung nach Anspruch 4, wobei
die Datenspeichereinheit dafür ausgelegt ist, Daten einer Korrespondenzbeziehung zwischen der realen Nummer und der verwalteten Nummer zu speichern.

6. Dienststeuereinrichtung nach Anspruch 4, die ferner eine Identitätsauthentifikationseinheit (505) umfasst, die dafür ausgelegt ist, Identitätsauthentifikation des Anrufers vor der Dienstauthentifikation durchzuführen.

7. Dienststeuereinrichtung nach Anspruch 4 oder 6, wobei die Dienststeuereinrichtung ein Dienststeuerpunkt oder ein Open Service Gateway ist.

8. Anrufverarbeitungssystem, **dadurch gekennzeichnet, dass** es eine Dienststeuereinrichtung umfasst, die dafür ausgelegt ist, mit einem angerufenen Endgerät zu kommunizieren; wobei
die Dienststeuereinrichtung (500) ferner dafür ausgelegt ist, eine Anrufanforderung, die eine reale Nummer einer angerufenen Nummer umfasst, von einem Anrufer zu empfangen, um den Anrufer zu authentifizieren, was eine Abfrage einer Liste von durch einen Angerufenen autorisierten anrufenden Nummern und Bestimmen, ob der Anrufer auf der Liste von autorisierten Nummern steht, umfasst, um eine verwaltete Nummer zu erhalten, die gemäß einer voreingestellten Korrespondenzbeziehung zwischen der realen Nummer und der verwalteten Nummer der realen Nummer entspricht, nachdem der Anrufer die Authentifikation besteht, und einen die verwaltete Nummer tragenden Anruf der realen Nummer einzuleiten; und
das angerufene Endgerät (510) dafür ausgelegt ist, beim Empfang des die verwaltete Nummer tragenden Anrufs die verwaltete Nummer zu identifizieren und Kommunikation mit dem Anrufer aufzubauen, nachdem die Identifikation bestanden ist.

9. Anrufverarbeitungssystem nach Anspruch 8, wobei die Dienststeuereinrichtung Folgendes umfasst:
eine Datenspeichereinheit, die dafür ausgelegt ist, Daten der Korrespondenzbeziehung zwischen der realen Nummer und der verwalteten Nummer zu speichern;
eine Dienstauthentifikationseinheit, die dafür ausgelegt ist, die Anrufanforderung, die die reale Nummer der angerufenen Nummer umfasst, von dem Anrufer zu empfangen und die Dienstauthentifikation des Anrufers durchzuführen, die Dienstauthentifikation, umfassend Abfrage einer Liste von durch einen Angerufenen autorisierten anrufenden Nummern, und Bestimmen, ob der Anrufer auf der Liste von autorisierten Nummern steht, umfasst;
eine Abfrageeinheit verwalteter Nummern, die dafür ausgelegt ist, die Datenspeichereinheit über die verwaltete Nummer abzufragen, die gemäß der voreingestellten Korrespondenzbeziehung zwischen der realen Nummer und der verwalteten Nummer der realen Nummer entspricht, nachdem der Anrufer Dienstauthentifikation besteht; und
eine Anrufeinleitungseinheit, die dafür ausgelegt ist, einen Anruf der realen Nummer von der verwalteten Nummer aus einzuleiten.

10. Anrufverarbeitungssystem nach Anspruch 9, wobei die Dienststeuereinrichtung ferner eine Identitätsauthentifikationseinheit umfasst, die dafür ausgelegt ist, vor der Dienstauthentifikation eine Identitätsauthentifikation des Anrufers durchzuführen.

11. Anrufverarbeitungssystem nach Anspruch 8, wobei die Dienststeuereinrichtung ein Dienststeuerpunkt ist oder die Dienststeuereinrichtung ein Open Service Gateway und ein Anwendungsserver ist.

## Revendications

1. Procédé de traitement d'appel, **caractérisé en ce qu'**il comprend :
la réception d'une demande d'appel, comprenant un numéro réel d'un numéro appelé, depuis un appelant (202);
l'authentification de l'appelant, laquelle consiste en une authentification de service comprenant l'interrogation d'une liste de numéros appelants autorisés par un appelé et le fait de déterminer si l'appelant figure ou non sur la liste de numéros autorisés (203)
l'obtention d'un numéro géré correspondant au numéro réel en fonction d'une relation de correspondance prédéfinie entre le numéro réel et le numéro géré après l'authentification réussie de l'appelant ;
le lancement d'un appel portant le numéro géré vers le numéro réel (204) ;
l'identification, par un terminal auquel appartient le numéro appelé, du numéro géré à la réception de l'appel portant le numéro géré, et
l'établissement d'une communication avec l'appelant après une identification réussie.

2. Procédé selon la revendication 1, dans lequel la demande d'appel est une demande d'appel vidéo multimédia.

3. Procédé selon la revendication 1 ou 2, dans lequel l'authentification comprend l'authentification d'identité et l'authentification de service de l'appelant ; et le processus d'exécution de l'authentification d'identité et de l'authentification de service de l'appelant comprend :
l'exécution tout d'abord de l'authentification d'identité de l'appelant, puis l'exécution de l'authentification de service de l'appelant une fois que l'authentification d'identité a réussi ; ou
l'exécution simultanée de l'authentification d'identité et de l'authentification de service de l'appelant.

4. Dispositif de commande de service, **caractérisé en ce qu'**il comprend :
une unité d'authentification de service (501) adaptée pour recevoir une demande d'appel, comprenant un numéro réel d'un numéro appelé, depuis un appelant et exécuter une authentification de service de l'appelant qui consiste en l'interrogation d'une liste de numéros appelants autorisés par un appelé et le fait de déterminer si l'appelant figure ou non sur la liste de numéros autorisés ;
une unité d'interrogation de numéro géré (503) adaptée pour interroger une unité de mémorisation de données (502) au sujet d'un numéro géré correspondant au numéro réel en fonction d'une relation de correspondance prédéfinie entre le numéro réel et le numéro géré après que l'authentification de service de l'appelant a réussi ; et
une unité de lancement d'appel (504) adaptée pour lancer un appel portant le numéro géré vers le numéro réel, afin de permettre à un terminal appelé d'identifier le numéro géré et d'établir une communication avec l'appelant après une identification réussie.

5. Dispositif de commande de service selon la revendication 4, dans lequel :
l'unité de mémorisation de données est adaptée pour mémoriser des données d'une relation de correspondance entre le numéro réel et le numéro géré.

6. Dispositif de commande de service selon la revendication 4, comprenant en outre une unité d'authentification d'identité (505) adaptée pour exécuter une authentification d'identité de l'appelant avant l'authentification de service.

7. Dispositif de commande de service selon la revendication 4 ou 6, le dispositif de commande de service étant un point de commande de service ou une passerelle de service ouvert.

8. Système de traitement d'appel, **caractérisé en ce qu'**il comprend : un dispositif de commande de service adapté pour communiquer avec un terminal appelé ; dans lequel
le dispositif de commande de service (500) est adapté en outre pour recevoir une demande d'appel, comprenant un numéro réel d'un numéro appelé, depuis un appelant, authentifier l'appelant, ce qui consiste en l'interrogation d'une liste de numéros appelants autorisés par un appelé et le fait de déterminer si l'appelant figure ou non sur la liste de numéros autorisés, obtenir un numéro géré correspondant au numéro réel en fonction d'une relation de correspondance prédéfinie entre le numéro réel et le numéro géré après que l'authentification de l'appelant a réussi, et lancer un appel portant le numéro géré vers le numéro réel ; et
le terminal appelé (510) est adapté pour identifier le numéro géré à la réception de l'appel portant le numéro géré et établir une communication avec l'appelant après une identification réussie.

9. Système de traitement d'appel selon la revendication 8, dans lequel le dispositif de commande de service comprend :
une unité de mémorisation de données adaptée pour mémoriser des données de la relation de correspondance entre le numéro réel et le numéro géré.
une unité d'authentification de service adaptée pour recevoir la demande d'appel, comprenant le numéro réel du numéro appelé, depuis l'appelant et exécuter l'authentification de service de l'appelant qui consiste en une authentification de service comprenant l'interrogation d'une liste de numéros appelants autorisés par un appelé et le fait de déterminer si l'appelant figure ou non sur la liste de numéros autorisés ;
une unité d'interrogation de numéro géré adaptée pour interroger l'unité de mémorisation de données au sujet du numéro géré correspondant au numéro réel en fonction de la relation de correspondance prédéfinie entre le numéro réel et le numéro géré après que l'authentification de service de l'appelant a réussi; et
une unité de lancement d'appel pour lancer un appel vers le numéro réel à partir du numéro géré.

10. Système de traitement d'appel selon la revendication 9, dans lequel le dispositif de commande de service comprend en outre une unité d'authentification d'identité adaptée pour exécuter une authentification d'identité de l'appelant avant l'authentification de service.

11. Système de traitement d'appel selon la revendication 8, dans lequel le dispositif de commande de service est un point de commande de service, ou le dispositif de commande de service est une passerelle de service ouvert et un serveur d'application.
